# EUROPEAN PATENT APPLICATION

(11) **EP 4 095 678 A1**
(43) Date of publication of application: **30.11.2022**
(21) Application number: 22177718.8
(22) Date of filing: 08.06.2022
(51) Int. Cl.: G06F 8/60, G06F 9/455, G06F 9/50

(54) **METHOD AND APPARATUS OF DEPLOYING A CLUSTER, DEVICE AND STORAGE MEDIUM**

(30) Priority: 20.08.2021 CN 202110961311
(71) Applicant: Beijing Baidu Netcom Science and Technology Co., Ltd., Beijing 100085 (CN)
(72) Inventor: ZHANG, Yanbo, Beijing, 100085 (CN)
(74) Representative: Regimbeau

(57) **Abstract**

Provided are a method and an apparatus of deploying a cluster, a device and a storage medium, which relate to the field of computer technologies and may be applied to the cloud computing technology. The method includes steps described below. Master node configuration information of a cluster master node and slave node configuration information of each cluster slave node are determined (S110). Independent configuration is performed (S120, S250) on the cluster master node according to the master node configuration information. The slave node configuration information is sent (S130) to each cluster slave node, so that each cluster slave node performs independent configuration on the cluster slave node according to the slave node configuration information.

## Description

### TECHNICAL FIELD

The present disclosure relates to the field of computer technologies and may be applied to the cloud computing technology.

### BACKGROUND

With the update and iteration of Internet technologies, service architectures are evolving, and microservice architectures gradually replace conventional monolithic architectures. Kubenetes (k8s for short), as the most popular orchestration tool for the microservice, is also widely used. Kubernetes is an open source platform used for automated deployment, dilatation, and operation and maintenance of container clusters. Through Kubernetes, user requirements can be quickly and effectively responded to, the application can be quickly and prospectively deployed and expanded, and new application functions can be seamlessly applied, so that resources are saved and the use of hardware resources is optimized. Kubernetes provides a complete open source solution for orchestration and management of containers. However, the Kubernetes cluster has many components and related plug-ins. Therefore, how to deploy the Kubernetes cluster quickly and concisely is a hot issue in the industry.

### SUMMARY

Embodiments of the present disclosure provide a method and an apparatus of deploying a cluster, a device and a storage medium, so that the deployment efficiency and the fault tolerance of the cluster can be improved, and the applicability and the extensibility of the deployed cluster can be improved.

In a first aspect, an embodiment of the present disclosure provides a method of deploying a cluster, applied to a cluster client program of a cluster master node and including steps described below.

Master node configuration information of the cluster master node and slave node configuration information of each of a plurality of cluster slave nodes are determined.

Independent configuration is performed on the cluster master node according to the master node configuration information.

A respective slave node configuration information is sent to each cluster slave node, so that each cluster slave node performs independent configuration on the cluster slave node according to the respective slave node configuration information.

In a second aspect, an embodiment of the present disclosure provides a method of deploying a cluster, applied to a cluster client program of a cluster slave node and including steps described below.

Slave node configuration information is received from a cluster master node.

Independent configuration is performed on the cluster slave node according to the slave node configuration information.

In a third aspect, an embodiment of the present disclosure provides an apparatus of deploying a cluster, configured on a cluster client program of a cluster master node and including a configuration information determination module, a first configuration module and a configuration information sending module.

The configuration information determination module is configured to determine master node configuration information of the cluster master node and slave node configuration information of each of a plurality of cluster slave nodes.

The first configuration module is configured to perform independent configuration on the cluster master node according to the master node configuration information.

The configuration information sending module is configured to send a respective slave node configuration information to each cluster slave node, so that each cluster slave node performs independent configuration on the each cluster slave node according to the respective slave node configuration information.

In a fourth aspect, an embodiment of the present disclosure provides an apparatus of deploying a cluster, configured on a cluster client program of a cluster slave node and including a configuration information reception module and a second configuration module.

The configuration information reception module is configured to receive slave node configuration information from a cluster master node.

The second configuration module is configured to perform independent configuration on the cluster slave node according to the slave node configuration information.

In a fifth aspect, an embodiment of the present disclosure provides an electronic device. The electronic device includes at least one processor and a memory communicatively connected to at least one processor.

The memory stores instructions executable by the at least one processor to cause the at least one processor to execute the method of deploying the cluster provided by any embodiment of the present disclosure.

In a sixth aspect, an embodiment of the present disclosure provides a non-transitory computer-readable storage medium storing computer instructions for causing a computer to execute the method of deploying the cluster provided by any embodiment of the present disclosure.

In a seventh aspect, an embodiment of the present disclosure provides a computer program product. The computer program product includes a computer program which, when executed by a processor, implements the method of deploying the cluster provided by any embodiment of the present disclosure.

According to the embodiments of the present disclosure, master node configuration information of a cluster master node and slave node configuration information of each cluster slave node are determined through a cluster client program of the cluster master node, thus independent configuration is performed on the cluster master node according to the determined master node configuration information, and the slave node configuration information is sent to each cluster slave node to enable a cluster client program of the each cluster slave node to perform independent configuration on the each cluster slave node according to the received slave node configuration information. In this way, the problem can be solved that the cluster deployed by the related cluster deployment method has relatively low applicability and extensibility, the deployment efficiency and the fault tolerance of the cluster can be improved, and the applicability and the extensibility of the deployed cluster can be improved.

It is to be understood that the content described in this part is neither intended to identify key or important features of the embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure.
FIG. 1 is a flowchart of a method of deploying a cluster according to an embodiment of the present disclosure;
FIG. 2 is a flowchart of a method of deploying a Kubernetes cluster according to an embodiment of the present disclosure;
FIG. 3 is a flowchart of a method of deploying a cluster according to an embodiment of the present disclosure;
FIG. 4 is a flowchart of a method of deploying a Kubernetes cluster according to an embodiment of the present disclosure;
FIG. 5 is a flowchart of a method of deploying a Kubernetes cluster according to an embodiment of the present disclosure;
FIG. 6 is a diagram illustrating the effect of interaction between Kubernetes cluster nodes according to an embodiment of the present disclosure;
FIG. 7 is a diagram illustrating the structure of a cluster deployment apparatus according to an embodiment of the present disclosure;
FIG. 8 is a diagram illustrating the structure of a cluster deployment apparatus according to an embodiment of the present disclosure; and
FIG. 9 is a diagram illustrating the structure of an electronic device for implementing a method of deploying a cluster according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Therefore, it will be appreciated by those having ordinary skill in the art that various changes and modifications may be made to the embodiments described herein without departing from the scope and spirit of the present disclosure. Similarly, description of well-known functions and constructions is omitted hereinafter for clarity and conciseness.

At present, Kubernetes supports three main types of cluster deployment manners: (1) Kubernetes cluster deployment based on Minikube; (2) the Kubernetes cluster deployment scheme provided based on cloud service providers; (3) container-based rapid deployment manners typically represented by Kubespray, Rancher Kubernetes Engine (RKE) and other deployment manners. However, the Kubernetes cluster obtained by the Kubernetes cluster deployment manner based on Minikube is generally only applicable to test use, and cannot be used in specific production environment. The Kubernetes cluster deployed based on the Kubernetes cluster deployment scheme provided by cloud service providers greatly depends on the capabilities provided by public clouds, can only be deployed on clouds, and thus cannot satisfy the requirements of privatization scenes. The Kubernetes cluster deployed by the container-based rapid deployment manners depends on the online environment (the cluster needs to obtain resources online), the configuration process of the slave node completely depends on the control of the master node, and the installation process of the cluster is not transparent enough, so that the problem, if occurs, cannot be quickly located. Since the master node of the cluster controls the whole configuration and deployment process of all nodes, when the cluster has a relatively large scale, the deployment of the cluster is easily affected by the concurrency performance of the master node control terminal and the deployment tool. It can be seen that the application performance of the container-based Kubernetes cluster deployment manners is not ideal in the large-scale scene, which will cause a system bottleneck, and thus the container-based Kubernetes cluster deployment manners cannot be effectively used in the large-scale Kubernetes cluster deployment scene. Therefore, the preceding existing Kubernetes cluster deployment methods have relatively low applicability and extensibility.

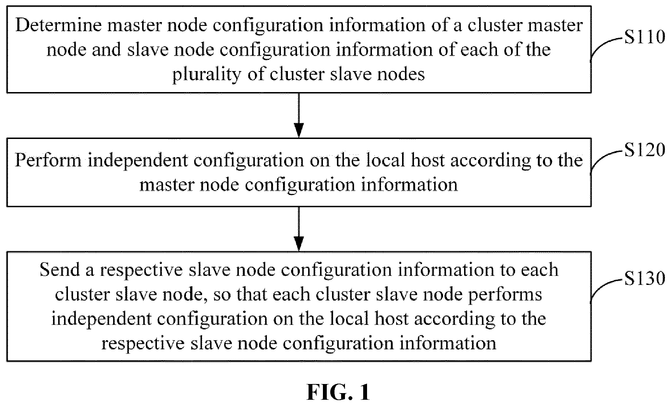

In an example, FIG. 1 is a flowchart of a method of deploying a cluster according to an embodiment of the present disclosure. The embodiment is applicable to the case of deploying a cluster according to a client-server (CS) architecture. The method may be executed by a cluster deployment apparatus, which may be implemented in the manner of software and/or hardware and may be generally integrated in an electronic device in which a cluster client program of a master node is installed. The electronic device may be a terminal device or a server device, and the embodiment of the present disclosure does not limit the type of the electronic device. Correspondingly, as shown in FIG. 1, the method includes operations described below.

In S 110, master node configuration information of a cluster master node and slave node configuration information of each of the plurality of cluster slave nodes are determined.

The cluster master node is the master node of the cluster, and the master node configuration information may be the configuration information of the master node. Optionally, the cluster includes a Kubernetes cluster, the cluster master node includes a Kubernetes cluster master node, and the cluster slave nodes include Kubernetes cluster slave nodes. Correspondingly, the Kubernetes cluster slave nodes are worker nodes of the Kubernetes cluster, or the Kubernetes cluster slave nodes may further include an ETCD (a highly-available key value store mainly for shared configuration and service discovery) node, and the slave node configuration information may be configuration information of the each slave node. The so-called configuration information refers to information used for configuring the node to enable the node to have the function of the Kubernetes cluster.

In the embodiment of the present disclosure, an example is used for specific illustration that the Kubernetes cluster is taken as the cluster, the Kubernetes cluster master node is taken as the cluster master node, and the Kubernetes cluster slave node is taken as the cluster slave node. The Kubernetes cluster is deployed by means of the CS architecture between each Kubernetes cluster node, so that a cluster client program needs to be installed on each Kubernetes cluster node. The cluster client program may be a client program for configuring the Kubernetes cluster node, and may be used for storing metadata of the Kubernetes cluster. The cluster client program of the Kubernetes cluster master node and the cluster client program of the Kubernetes cluster slave node form the CS architecture mode. In the CS architecture mode, the Kubernetes cluster master node issues a configuration task, and the cluster client of the Kubernetes cluster slave node may actively acquire the configuration task of a local host and independently complete the configuration of the Kubernetes cluster slave node.

Correspondingly, the example is still used for specific illustration that the Kubernetes cluster is taken as the cluster, the Kubernetes cluster master node is taken as the cluster master node, and the Kubernetes cluster slave node is taken as the cluster slave node. In the CS architecture mode, the master node configuration information of the Kubernetes cluster master node and the slave node configuration information of the Kubernetes cluster slave node may both be determined by the cluster client program of the Kubernetes cluster master node.

In S120, independent configuration is performed on the local host according to the master node configuration information.

Correspondingly, the example is still used for specific illustration that the Kubernetes cluster is taken as the cluster, the Kubernetes cluster master node is taken as the cluster master node, and the Kubernetes cluster slave node is taken as the cluster slave node. After the cluster client program of the Kubernetes cluster master node determines the master node configuration information of the Kubernetes cluster master node, the independent configuration may be performed on the local host according to the determined master node configuration information of the Kubernetes cluster master node, so that the local host has the relevant functions of the Kubernetes cluster master node.

In S 130, a respective slave node configuration information is sent to each cluster slave node, so that each cluster slave node performs independent configuration on the local host according to the respective slave node configuration information.

In the embodiment of the present disclosure, the example is still used for specific illustration that the Kubernetes cluster is taken as the cluster, the Kubernetes cluster master node is taken as the cluster master node, and the Kubernetes cluster slave node is taken as the cluster slave node. After the cluster client program of the Kubernetes cluster master node determines the slave node configuration information of the Kubernetes cluster slave node, the slave node configuration information of the Kubernetes cluster slave node may be sent to each corresponding Kubernetes cluster slave node. After receiving the slave node configuration information corresponding to the local host, the each Kubernetes cluster slave node may perform the independent configuration on itself according to the acquired slave node configuration information.

It is to be noted that the cluster client program may be configured with a task execution module for performing the independent configuration on the local host according to the acquired node configuration information or executing other custom tasks. In addition, the cluster client program may further deploy other functions to support the CS architecture mode. Exemplarily, the cluster client program of the Kubernetes cluster master node may be configured with a task issuing module for reading a local configuration file and performing initialization to determine and issue the slave node configuration information of each Kubernetes cluster slave node. The cluster client program of the Kubernetes cluster slave node may be configured with a task acquisition module for acquiring the slave node configuration information corresponding to the local host and ensuring the security and uniqueness of the slave node configuration information. The cluster client program of the Kubernetes cluster slave node may further be configured with a result collection module for reporting data generated during the configuration and deployment process of the local host to the Kubernetes cluster master node. The cluster client program of the Kubernetes cluster master node may further be configured with a result storage module for receiving data reported by each Kubernetes cluster slave node and storing the received data in a configuration medium. The cluster client program may further be configured with modules of other function types according to business requirements, which is not limited in the embodiment of the present disclosure.

The Kubernetes cluster slave node performing the independent configuration on the local host according to the slave node configuration information refers to that the configuration process of the Kubernetes cluster slave node is completely separated from the control of and dependence on the Kubernetes cluster master node. That is, the Kubernetes cluster master node no longer controls the whole configuration and deployment process of all nodes, and the configuration processes of various nodes are completely independent of and unaffected by each other, thereby the efficiency of Kubernetes cluster deployment is improved. It can be seen that even if the to-be-configured Kubernetes cluster has a relatively large scale, since each Kubernetes cluster slave node may independently perform the configuration process of the local host, the configuration and deployment process of the Kubernetes cluster slave node is not affected by the concurrency performance of the cluster client program of the Kubernetes cluster master node and the deployment tool, and does not cause a system bottleneck, so that the scale of the cluster can be extended as required. Meanwhile, the Kubernetes cluster deployed by the method of deploying the Kubernetes cluster provided by the embodiment of the present disclosure is applicable to a variety of application scenes, including but not limited to the test scene, the production scene, the cloud computing platform, etc. It can be seen that the method of deploying the Kubernetes cluster provided by the embodiment of the present disclosure has high applicability and high extensibility. It is to be noted that when the deployed Kubernetes cluster is applied to the cloud computing platform, in addition to the need of deploying conventional Kubernetes cluster functions to the Kubernetes cluster, it is also required to configure relevant functions of the cloud platform for each Kubernetes cluster node, such as cloud storage and cloud computing functions.

According to the embodiments of the present disclosure, the master node configuration information of the cluster master node and the cluster slave node configuration information are determined through the cluster client program of the cluster master node, thus the independent configuration is performed on the local host according to the determined master node configuration information, and the slave node configuration information is sent to each cluster slave node to enable the cluster client program of the each cluster slave node to perform the independent configuration on the local host according to the received slave node configuration information. In this way, the problem can be solved that the cluster deployed by the related cluster deployment method has relatively low applicability and extensibility, the deployment efficiency and the fault tolerance of the cluster can be improved, and the applicability and the extensibility of the deployed cluster can be improved.

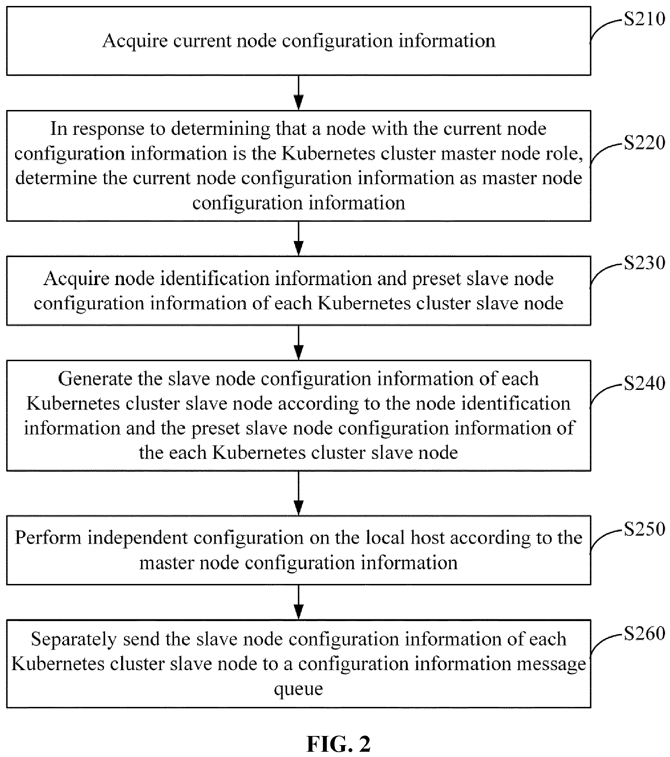

In an example, FIG. 2 is a flowchart of a method of deploying a Kubernetes cluster according to an embodiment of the present disclosure. Based on the technical solutions of the preceding embodiments, the embodiment of the present disclosure makes the optimization and improvement. In the embodiment, the Kubernetes cluster is taken as the cluster, the Kubernetes cluster master node is taken as the cluster master node, the Kubernetes cluster slave node is taken as the cluster slave node, and thus multiple specific implementations are provided in which the master node configuration information and the slave node configuration information are determined, and the Kubernetes cluster master node performs the independent configuration on the local host according to the master node configuration information.

As shown in FIG. 2, the method includes steps described below.

In S210, current node configuration information is acquired.

The current node configuration information is the relevant configuration information of a current node.

In S220, in response to determining that a node with the current node configuration information is the Kubernetes cluster master node, the current node configuration information is determined as master node configuration information.

The master node configuration information includes node configuration information and Kubernetes cluster custom configuration information. Exemplarily, the Kubernetes cluster custom configuration information may include, but is not limited to, information such as the network, the port and the node deployment path, which is not limited by the embodiment of the present disclosure.

Before each Kubernetes cluster node is configured, all to-be-configured Kubernetes cluster nodes have the equal role. The staff responsible for configuration may install a cluster client program for each to-be-configured Kubernetes cluster nodes. In an initial state, the cluster client program installed for each to-be-configured Kubernetes cluster node has the same function. The staff responsible for configuration may select one of the to-be-configured nodes as the Kubernetes cluster master node. Optionally, the staff responsible for configuration may set the node role in the configuration file of the cluster client program of the selected to-be-configured Kubernetes cluster node as the Kubernetes cluster master node role. When acquiring the configuration information of a to-be-configured Kubernetes cluster node, the cluster client program of the to-be-configured Kubernetes cluster node may identify the node role of the to-be-configured Kubernetes cluster node. If it is determined that the node role of the to-be-configured Kubernetes cluster node is the Kubernetes cluster master node role, the local host is determined as the Kubernetes cluster master node, and the configuration information of the to-be-configured Kubernetes cluster node may be determined as the master node configuration information. If it is determined that the node role of the to-be-configured Kubernetes cluster node is a default value, the local host is determined as a Kubernetes cluster slave node. At this time, the Kubernetes cluster slave node may wait to receive slave node configuration information.

In the preceding technical solution, the node type of each Kubernetes cluster node is configured by configuring the node role of the node configuration information, so that the quick deployment of the node type of each Kubernetes cluster node is achieved.

In S230, node identification information and preset slave node configuration information of each Kubernetes cluster slave node are acquired.

The node identification information may be information for identifying a Kubernetes cluster slave node. Optionally, the Internet Protocol (the protocol for interconnection between networks) address, the host name or the like of each Kubernetes cluster slave node may be used as the node identification information of the each Kubernetes cluster slave node. The preset slave node configuration information may be configuration information preset for the Kubernetes cluster slave node.

In S240, the slave node configuration information of each Kubernetes cluster slave node is generated according to the node identification information and the preset slave node configuration information of the each Kubernetes cluster slave node.

In the embodiment of the present disclosure, the cluster client program of the Kubernetes cluster master node may acquire the node identification information and the preset slave node configuration information of each Kubernetes cluster slave node in various manners. For example, the node identification information and the preset slave node configuration information of each Kubernetes cluster slave node may be acquired in the manner of data import or data download, or may also be acquired from the information directly input by the staff responsible for configuration. The embodiment of the present disclosure does not limit the manner in which the cluster client program of the Kubernetes cluster master node acquires the node identification information and the preset slave node configuration information of each Kubernetes cluster slave node.

Optionally, the cluster client program of the Kubernetes cluster master node may correspondingly acquire the node identification information of each Kubernetes cluster slave node and the preset slave node configuration information corresponding to the each Kubernetes cluster slave node. That is, the node identification information of each Kubernetes cluster slave node and the preset slave node configuration information corresponding to the each Kubernetes cluster slave node forms a set of data. Alternatively, the cluster client program of the Kubernetes cluster master node may also acquire node identification information of all Kubernetes cluster slave nodes uniformly, and acquire preset slave node configuration information of the all Kubernetes cluster slave nodes uniformly, that is, the node identification information and the preset slave node configuration information may be two sets of data, which is not limited in the embodiment of the present disclosure.

Correspondingly, after acquiring the node identification information and the preset slave node configuration information of the Kubernetes cluster slave node, the cluster client program of the Kubernetes cluster master node may generate the slave node configuration information according to the node identification information and the preset slave node configuration information of each Kubernetes cluster slave node. Optionally, the cluster client program of the Kubernetes cluster master node may establish a mapping relationship between the node identification information of each Kubernetes cluster slave node and the preset slave node configuration information corresponding to the each Kubernetes cluster slave node, so that the slave node configuration information of each Kubernetes cluster slave node is generated. That is, the slave node configuration information of each Kubernetes cluster slave node includes node identification information of a Kubernetes cluster slave node and preset slave node configuration information corresponding to the Kubernetes cluster slave node.

In the preceding technical solution, the preset slave node configuration information corresponding to each Kubernetes cluster slave node is identified by using the node identification information, so that the security and uniqueness of the slave node configuration information can be ensured.

In S250, independent configuration is performed on the local host according to the master node configuration information.

In an optional embodiment of the present disclosure, before the independent configuration is performed on the local host according to the master node configuration information, the method may further include: performing a Kubernetes cluster configuration check and a Kubernetes cluster environment check on the local host. The step in which the independent configuration is performed on the local host according to the master node configuration information may include: performing Kubernetes cluster initialization configuration on the local host; and installing a Kubernetes cluster association component on the local host. The Kubernetes cluster association component includes a Kubernetes cluster core component, a Kubernetes cluster basic functional component and a Kubernetes cluster additional functional component.

Before performing the independent configuration on the local host according to the master node configuration information, the cluster client program of the Kubernetes cluster master node may first perform the configuration check and the environment check on the Kubernetes cluster master node. Optionally, the contents of the configuration check performed by the cluster client program of the Kubernetes cluster master node on the Kubernetes cluster master node may include but are not limited to the following operations: 1) checking whether the configuration of hosts (a system file without an extension) is correct, and confirming whether parameters such as kube-master, kube-node and ETCD are empty; 2) checking whether the format of hostname (the host name) is correct; 3) checking whether the network plug-in is compatible; 4) checking whether various switches are set correctly, that is, whether the various switches are in the bool type; 5) checking whether the number of ETCDs is an odd number; 6) checking whether dashboard (the dashboard) is turned on, or the role-based access control (RBAC) function is also turned on in the case of apiserver insecure port, etc.; 7) checking whether the kernel version satisfies the requirements; 8) examining whether the format of Classless Inter-Domain Routing (CIDR) of pod (a container) and service is correct; 9) checking whether the version of the operating system (OS) satisfies the requirements; etc.

Optionally, the contents of the environment check performed by the cluster client program of the Kubernetes cluster master node on the Kubernetes cluster master node may include but are not limited to the following operations: 1) checking whether the kernel version satisfies the requirements; 2) checking whether the OS version satisfies the requirements; 3) checking whether the port is occupied; 4) checking whether the network is connected; 5) checking whether the residual configuration of docker, k8s and ETCD exists.

Correspondingly, when the cluster client program of the Kubernetes cluster master node performs the independent configuration on the local host according to the master node configuration information, the Kubernetes cluster initialization configuration may be first performed on the local host. Optionally, the contents of the Kubernetes cluster initialization configuration may include but are not limited to the following operations: 1) stopping firewalld (a fire wall) and selinux (a provided mandatory access control); 2) configuring the yum source, where the yum source may be used for acquiring and installing the dependency of a Kubernetes cluster application (that is, a container); 3) adding kernel parameters; 4) closing the swap (hard disk partitioning) function; 5) setting the time zone and synchronizing time; 6) installing, configuring and starting docker (a container); 7) creating a relevant directory of the Kubernetes configuration. Optionally, the yum source may be the local yum source or the online yum source. When the yum source is the local yum source, during the configuration process of the Kubernetes cluster, the dependency may be acquired in an offline manner. The time synchronization may be achieved in the manner of building a Network Time Protocol (NTP) server in the Kubernetes cluster master node. The NTP server may be used for synchronizing the time of each node regularly (such as every 15s or 30s) to keep the time of each node consistent. Optionally, the NTP server may be a local NTP server or an online NTP server. When the NTP server uses the local NTP server, the time of each node may be synchronized in the offline manner during the configuration process of the Kubernetes cluster.

After the cluster client program of the Kubernetes cluster master node performs the Kubernetes cluster initialization configuration on the local host, the Kubernetes cluster association component may be further installed on the local host. The Kubernetes cluster association component is the component needing to be installed on the Kubernetes cluster master node, and may include but is not limited to three types of components, that is, the Kubernetes cluster core component, the Kubernetes cluster basic functional component and the Kubernetes cluster additional functional component. Optionally, the cluster client program of the Kubernetes cluster master node may first install the Kubernetes cluster core component on the Kubernetes cluster master node, and the specific process is as follows: installing kubeadm (a tool for quickly installing the Kubernetes cluster), generating various certificates of the Kubernetes cluster core component, generating the manifest file (a description file of the Extensible Markup Language (XML)) of the Kubernetes cluster core component, and starting the Kubelet component, so as to initialize the core component of the Kubernetes cluster. Further, the cluster client program of the Kubernetes cluster master node may install the Kubernetes cluster basic functional component on the Kubernetes cluster master node, and the specific process is as follows: installing a network plug-in, installing a storage component, and finally installing the Domain Name System (DNS) resolution component. Further, the cluster client program of the Kubernetes cluster master node may install the Kubernetes cluster additional functional component on the Kubernetes cluster master node, and the specific process is as follows: installing the container orchestration tool helm, installing the graphics processing unit (GPU) driver plug-in, installing the gateway component ingress, installing the image repository component harbor, and finally, installing the monitoring component prometheus. Optionally, the image repository built on the local host by the cluster client program of the Kubernetes cluster master node may be a local image repository or an online image repository, and after the image repository is built, the image needed by the Kubernetes cluster may be uploaded to the image repository.

It is to be understood that when the yum source, the NTP server and the image repository are local function components, the deployment process of the Kubernetes cluster may be achieved completely in the offline deployment manner without relying on any online service.

In an optional embodiment of the present disclosure, after the independent configuration is performed on the local host according to the master node configuration information, the method may further include: creating a Kubernetes cluster test application; and detecting a Kubernetes cluster basic function according to the Kubernetes cluster test application.

In the preceding technical solution, the configuration check and the environment check are performed on the Kubernetes cluster master node, so that the accuracy and reliability of basic configuration information and the configuration environment can be ensured. Each component of the local host is configured according to the master node configuration information, and the Kubernetes cluster basic function is detected by using the Kubernetes cluster test application after the configuration is completed, so that the effectiveness of the configuration process of the Kubernetes cluster master node can ensured.

In S260, the slave node configuration information of each Kubernetes cluster slave node is separately sent to a configuration information message queue.

The configuration information message queue may be a message queue for receiving and caching the slave node configuration information.

In the embodiment of the present disclosure, after determining the slave node configuration information of each Kubernetes cluster slave node, the Kubernetes cluster master node may send the slave node configuration information to the configuration information message queue. Each Kubernetes cluster slave node may acquire matching target slave node configuration information from the configuration information message queue according to node identification information of the local host, so as to perform the independent configuration on the local host according to the acquired target slave node configuration information. Each piece of slave node configuration information is cached by the configuration information message queue, so that the decoupling of the configuration process between the Kubernetes cluster master node and the Kubernetes cluster slave node can be achieved.

In the preceding technical solution, the cluster client program of the Kubernetes cluster master node configures the components of the local host according to the master node configuration information, and sends the slave node configuration information to the configuration information message queue, so as to send the slave node configuration information of each Kubernetes cluster slave node through the configuration information message queue to the corresponding Kubernetes cluster slave node. In this way, the Kubernetes cluster deployment manner in the CS architecture mode is implemented, the deployment efficiency and the fault tolerance of the Kubernetes cluster are improved, and the applicability and the extensibility of the deployed Kubernetes cluster are improved.

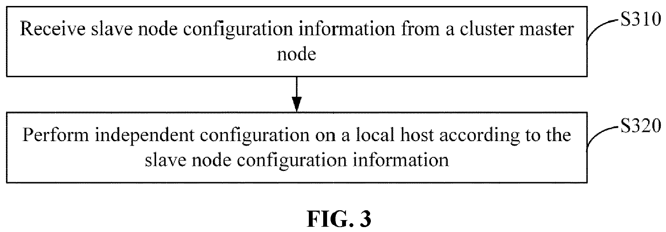

In an example, FIG. 3 is a flowchart of a method of deploying a cluster according to an embodiment of the present disclosure. The embodiment is applicable to the case of deploying a cluster according to a CS architecture. The method may be executed by a cluster deployment apparatus, which may be implemented in the manner of software and/or hardware and may be generally integrated in an electronic device in which a cluster client program of a slave node is installed. The electronic device may be a terminal device or a server device, and the embodiment of the present disclosure does not limit the type of the electronic device. Correspondingly, as shown in FIG. 3, the method includes operations described below.

In S310, slave node configuration information is received from a cluster master node.

In S320, independent configuration is performed on a local host according to the slave node configuration information.

In the embodiment of the present disclosure, optionally, a cluster may include a Kubernetes cluster, the cluster master node may include a Kubernetes cluster master node, and a cluster slave node may include a Kubernetes cluster slave node.

Correspondingly, an example is used for specific illustration that the Kubernetes cluster is taken as the cluster, the Kubernetes cluster master node is taken as the cluster master node, and the Kubernetes cluster slave node is taken as the cluster slave node. The cluster client program of the Kubernetes cluster slave node may receive the slave node configuration information from the Kubernetes cluster master node, so as to perform the independent configuration on the local host according to the received slave node configuration information. That is, a cluster client program of the Kubernetes cluster master node and the cluster client program of the Kubernetes cluster slave node forms the CS architecture mode. In the CS architecture mode, master node configuration information of the Kubernetes cluster master node and the slave node configuration information of the Kubernetes cluster slave node may both be determined by the cluster client program of the Kubernetes cluster master node. The configuration process of the Kubernetes cluster slave node is completely separated from the control of and dependence on the Kubernetes cluster master node. That is, the Kubernetes cluster master node no longer controls the whole configuration and deployment process of all nodes, and the configuration processes of various nodes are completely independent of and unaffected by each other.

In the embodiment of the present disclosure, the example is still used for specific illustration that the Kubernetes cluster is taken as the cluster, the Kubernetes cluster master node is taken as the cluster master node, and the Kubernetes cluster slave node is taken as the cluster slave node. After the cluster client program of the Kubernetes cluster slave node runs, the cluster client program of the Kubernetes cluster slave node may be automatically registered with the cluster client program of the Kubernetes cluster master node. The cluster client program of the Kubernetes cluster master node may monitor the state of the cluster client program of the Kubernetes cluster slave node in real time, so as to avoid the cluster client program of the Kubernetes cluster slave node from crashing or other failures in the cluster deployment process. When monitoring that the cluster client program of a certain one or more Kubernetes cluster slave nodes fails to work, after the failed cluster client program of the Kubernetes cluster slave node restarts, the cluster client program of the Kubernetes cluster master node resends the corresponding slave node configuration information to the cluster client program of the Kubernetes cluster slave node. The restarting cluster client program of the Kubernetes cluster slave node may reacquire the slave node configuration information from the Kubernetes cluster master node. It can be seen that the cluster client program in the CS architecture mode can effectively improve the fault tolerance of the Kubernetes cluster deployment.

In the embodiment of the present disclosure, the cluster client program of the cluster slave node receives the cluster slave node configuration information from the cluster client program of the master node, so as to perform the independent configuration on the local host according to the received slave node configuration information. In this way, the problem can be solved that the cluster deployed by the related cluster deployment method has relatively low applicability and extensibility, the deployment efficiency and the fault tolerance of the cluster can be improved, and the applicability and the extensibility of the deployed cluster can be improved.

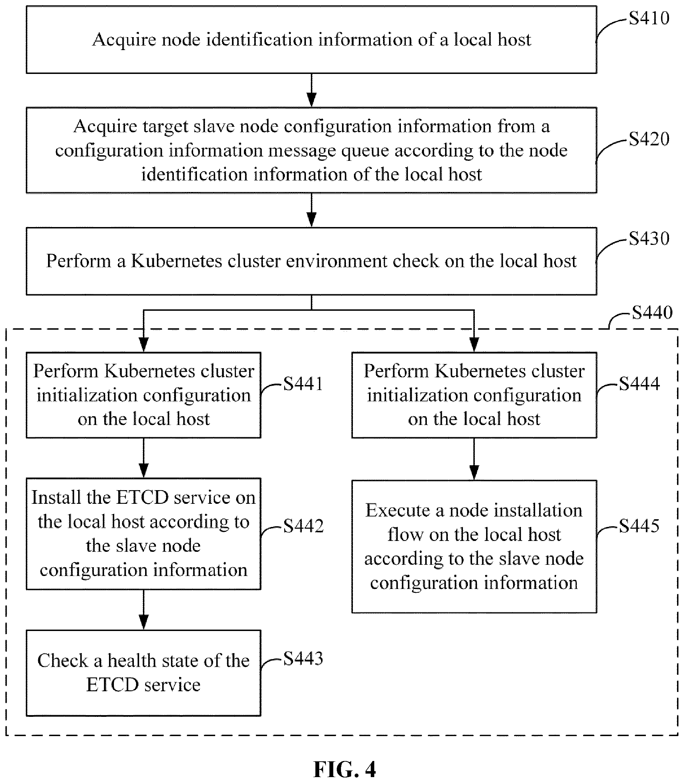

In an example, FIG. 4 is a flowchart of a method of deploying a Kubernetes cluster according to an embodiment of the present disclosure. Based on the technical solutions of the preceding embodiments, the embodiment of the present disclosure makes the optimization and improvement. In the embodiment, the Kubernetes cluster is taken as the cluster, the Kubernetes cluster master node is taken as the cluster master node, the Kubernetes cluster slave node is taken as the cluster slave node, and thus multiple specific implementations are provided in which the slave node configuration information from the Kubernetes cluster master node is received, and then the independent configuration is performed on the local host according to the slave node configuration information.

As shown in FIG. 4, the method includes steps described below.

In S410, node identification information of a local host is acquired.

In S420, target slave node configuration information is acquired from a configuration information message queue according to the node identification information of the local host.

The configuration information message queue is used for receiving slave node configuration information from a Kubernetes cluster master node.

The target slave node configuration information may be slave node configuration information of which node identification information is the same as the node identification information of the local host.

In the embodiment of the present disclosure, a cluster client program of the Kubernetes cluster master node may communicate with a cluster client program of a Kubernetes cluster slave node via the configuration information message queue. The cluster client program of the Kubernetes cluster slave node accesses the configuration information message queue to search for the target slave node configuration information matching the local host from the configuration information message queue according to the node identification information of the local host.

In the preceding technical solution, slave node configuration information corresponding to each Kubernetes cluster slave node is acquired by using the node identification information, so that the security and uniqueness of the acquired slave node configuration information can be ensured.

In S430, a Kubernetes cluster environment check is performed on the local host.

In the embodiment of the present disclosure, the type of the Kubernetes cluster slave node may be a worker node or an ETCD node. It is to be understood that when an ETCD service is deployed on the Kubernetes cluster master node, the type of Kubernetes cluster slave node only includes the worker node.

Correspondingly, the Kubernetes cluster environment check performed on the worker node or the ETCD node before the configuration may include but is not limited to the following operations: 1) checking whether the kernel version satisfies the requirements; 2) checking whether the OS version satisfies the requirements; 3) checking whether the port is occupied; 4) checking whether the network is connected; 5) checking whether the residual configuration of docker, k8s and ETCD exists.

In the preceding technical solution, the environment check is performed on the Kubernetes cluster slave node, so that the accuracy and reliability of the configuration environment can be ensured.

In S440, independent configuration is performed on the local host according to the slave node configuration information.

In the embodiment of the present disclosure, if the node type of the local host is the ETCD node, S440 may include steps described below.

In S441, Kubernetes cluster initialization configuration is performed on the local host.

Optionally, if the node type of the local host is the ETCD node, the contents of the Kubernetes cluster initialization configuration performed on the local host by the cluster client program of the Kubernetes cluster slave node may include but are not limited to the following operations: 1) stopping firewalld and selinux; 2) configuring the yum source; 3) adding kernel parameters; 4) closing swap; 5) setting the time zone and synchronizing time; 6) installing, configuring and starting docker. Optionally, the yum source may be the local yum source or the online yum source. When the yum source is the local yum source, during the configuration process of the Kubernetes cluster, the dependency may be acquired in an offline manner. The time synchronization may be achieved in the manner of building an NTP server in the Kubernetes cluster slave node. The NTP server may be used for synchronizing the time of each node regularly (such as every 15s or 30s) to keep the time of each node consistent. Optionally, the NTP server may be a local NTP server or an online NTP server. When the NTP server uses the local NTP server, the time of each node may be synchronized in the offline manner during the configuration process of the Kubernetes cluster.

In S442, the ETCD service is installed on the local host according to the slave node configuration information.

Optionally, if the node type of the local host is the ETCD node, the contents of the cluster client program of the Kubernetes cluster slave node installing the ETCD service on the local host according to the slave node configuration information may include but are not limited to the following operations: 1) generating an ETCD certificate; 2) configuring systemctl (a linux command), and starting the ETCD through the docker run parameter; 3) copying the etcdctl command from the ETCD container to the host.

In S443, a health state of the ETCD service is checked.

Correspondingly, after the ETCD node completes the configuration of the local host, the health state of the ETCD service may be detected to ensure that the ETCD service is available.

In the preceding technical solution, the cluster client program of the ETCD node performs Kubernetes cluster initialization configuration on the local host, installs the ETCD service on the local host according to the slave node configuration information, and checks the health state of the ETCD service after the configuration is completed, so that the rapid deployment of the ETCD node is achieved.

In the embodiment of the present disclosure, if the node type of the local host is the worker node, S440 may include steps described below.

In S444, Kubernetes cluster initialization configuration is performed on the local host.

Optionally, if the node type of the local host is the worker node, the contents of the Kubernetes cluster initialization configuration performed on the local host by the cluster client program of the Kubernetes cluster slave node may include but are not limited to the following operations: 1) stopping firewalld and selinux; 2) configuring the yum source; 3) adding kernel parameters; 4) closing swap; 5) setting the time zone and synchronizing time; 6) installing, configuring and starting docker. Optionally, the yum source may be the local yum source or the online yum source. When the yum source is the local yum source, during the configuration process of the Kubernetes cluster, the dependency may be acquired in an offline manner. The time synchronization may be achieved in the manner of building an NTP server in the Kubernetes cluster slave node. The NTP server may be used for synchronizing the time of each node regularly (such as every 15s or 30s) to keep the time of each node consistent. Optionally, the NTP server may be a local NTP server or an online NTP server. When the NTP server uses the local NTP server, the time of each node may be synchronized in the offline manner during the configuration process of the Kubernetes cluster.

In S445, a node installation flow is executed on the local host according to the slave node configuration information.

Optionally, if the node type of the local host is the worker node, the contents of the node installation flow executed by the cluster client program of the Kubernetes cluster slave node on the local host according to the slave node configuration information may include but are not limited to the following operations: 1) installing the kubelet component; 2) opening the automatic rotation of certificates; 3) acquiring relevant configuration of the kubeadm join command from the master node master0; 4) adding the local host to theKubernetes cluster.

In the preceding technical solution, the cluster client program of the node performs the Kubernetes cluster initialization configuration on the local cost and executes the node installation process on the local cost according to the slave node configuration information, so that the rapid deployment of the node is achieved.

In the preceding technical solution, the cluster client program of the Kubernetes cluster slave node performs quick and independent configuration one each Kubernetes cluster slave node, so that the deployment efficiency and the fault tolerance of the Kubernetes cluster are improved, and the applicability and the extensibility of the deployed Kubernetes cluster are improved.

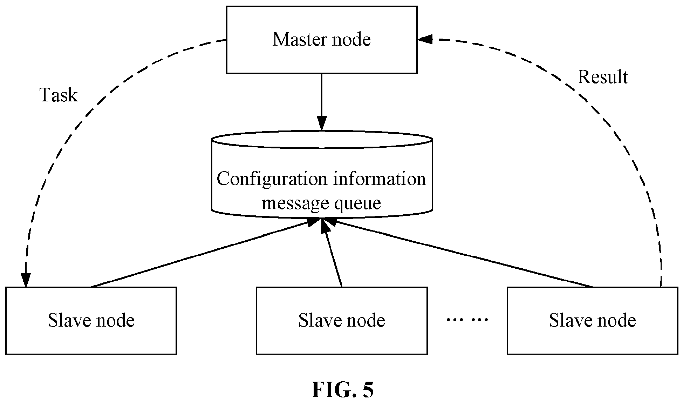

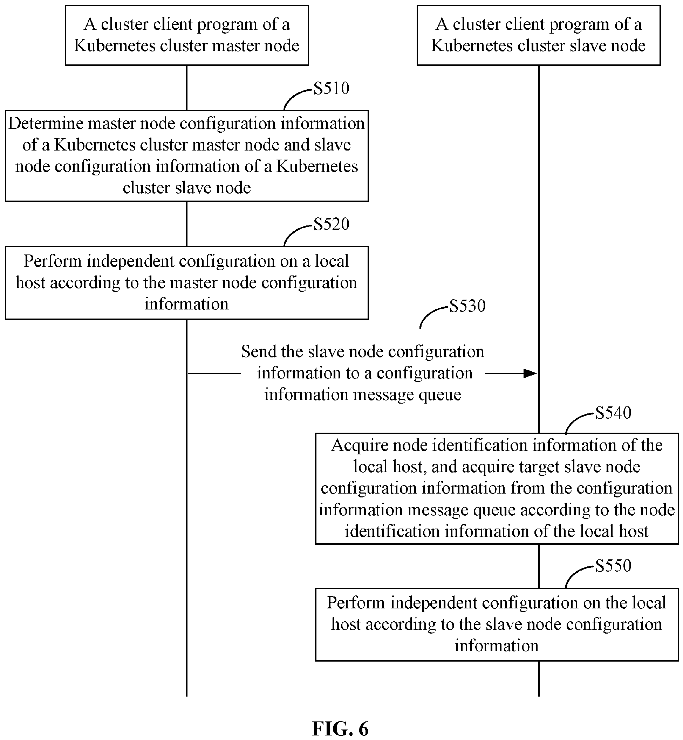

In an embodiment, FIG. 5 is a flowchart of a method of deploying a Kubernetes cluster according to an embodiment of the present disclosure, and FIG. 6 is a diagram illustrating the effect of interaction between Kubernetes cluster nodes according to an embodiment of the present disclosure. The embodiment is applicable to the case of deploying a Kubernetes cluster according to a CS architecture manner. Correspondingly, as shown in FIG. 5 and FIG. 6, the method includes operations described below.

In S510, a cluster client program of a Kubernetes cluster master node determines master node configuration information of a Kubernetes cluster master node and slave node configuration information of a Kubernetes cluster slave node.

In an optional embodiment of the present disclosure, the step in which the cluster client program of the Kubernetes cluster master node determines the master node configuration information of the Kubernetes cluster master node may include steps described below. The Kubernetes cluster master node acquires current node configuration information. In a case where it is determined that a node role of the current node configuration information is a Kubernetes cluster master node role, the Kubernetes cluster master node determines the current node configuration information as the master node configuration information. The master node configuration information includes node configuration information and Kubernetes cluster custom configuration information.

In an optional embodiment of the present disclosure, the step in which the cluster client program of the Kubernetes cluster master node determines the slave node configuration information of the Kubernetes cluster slave node may include steps described below. The Kubernetes cluster master node acquires node identification information and preset slave node configuration information of each Kubernetes cluster slave node. The Kubernetes cluster master node generates the slave node configuration information according to the node identification information and the preset slave node configuration information of the each Kubernetes cluster slave node.

In S520, the cluster client program of the Kubernetes cluster master node performs independent configuration on a local host according to the master node configuration information.

In an optional embodiment of the present disclosure, the step in which the cluster client program of the Kubernetes cluster master node performs the independent configuration on the local host according to the master node configuration information may include the step described below. The Kubernetes cluster master node performs a Kubernetes cluster configuration check and a Kubernetes cluster environment check on the local host, further performs Kubernetes cluster initialization configuration on the local cost, installs a Kubernetes cluster association component on the local host, where the Kubernetes cluster association component includes a Kubernetes cluster core component, a Kubernetes cluster basic functional component and a Kubernetes cluster additional functional component, finally creates a Kubernetes cluster test application, and detects a Kubernetes cluster basic function according to the Kubernetes cluster test application.

In S530, the cluster client program of the Kubernetes cluster master node sends the slave node configuration information to a configuration information message queue.

In S540, a cluster client program of the Kubernetes cluster slave node acquires node identification information of the local host, and acquires target slave node configuration information from the configuration information message queue according to the node identification information of the local host.

In S550, the cluster client program of the Kubernetes cluster slave node performs independent configuration on the local host according to the slave node configuration information.

In an optional embodiment of the present disclosure, before the cluster client program of the Kubernetes cluster slave node performs the independent configuration on the local host according to the slave node configuration information, the method may further include the step described below. The cluster client program of the Kubernetes cluster slave node performs a Kubernetes cluster environment check on the local host.

In an optional embodiment of the present disclosure, if the node type of the local host is a service discovery ETCD node, the step in which the cluster client program of the Kubernetes cluster slave node performs the independent configuration on the local host according to the slave node configuration information may include steps described below. The cluster client program of the Kubernetes cluster slave node performs Kubernetes cluster initialization configuration on the local host. The cluster client program of the Kubernetes cluster slave node installs an ETCD service on the local host according to the slave node configuration information. The cluster client program of the Kubernetes cluster slave node checks a health state of the ETCD service.

In an optional embodiment of the present disclosure, if the node type of the local host is a service discovery node, the step in which the cluster client program of the Kubernetes cluster slave node performs the independent configuration on the local host according to the slave node configuration information may include steps described below. The cluster client program of the Kubernetes cluster slave node performs Kubernetes cluster initialization configuration on the local host. The cluster client program of the Kubernetes cluster slave node executes a node installation process on the local cost according to the slave node configuration information.

According to the embodiments of the present disclosure, the master node configuration information of the Kubernetes cluster master node and the Kubernetes cluster slave node configuration information are determined through the cluster client program of the Kubernetes cluster master node, thus the independent configuration is performed on the local host according to the determined master node configuration information, and the slave node configuration information is sent to each Kubernetes cluster slave node to enable the cluster client program of the each Kubernetes cluster slave node to perform the independent configuration on the local host according to the received slave node configuration information. In this way, the problem can be solved that the Kubernetes cluster deployed by the related Kubernetes cluster deployment method has relatively low applicability and extensibility, the deployment efficiency and the fault tolerance of the Kubernetes cluster can be improved, and the applicability and the extensibility of the deployed Kubernetes cluster can be improved.

It is to be noted that any arrangement and combination of various technical features in the preceding embodiments are also within the scope of the present disclosure.

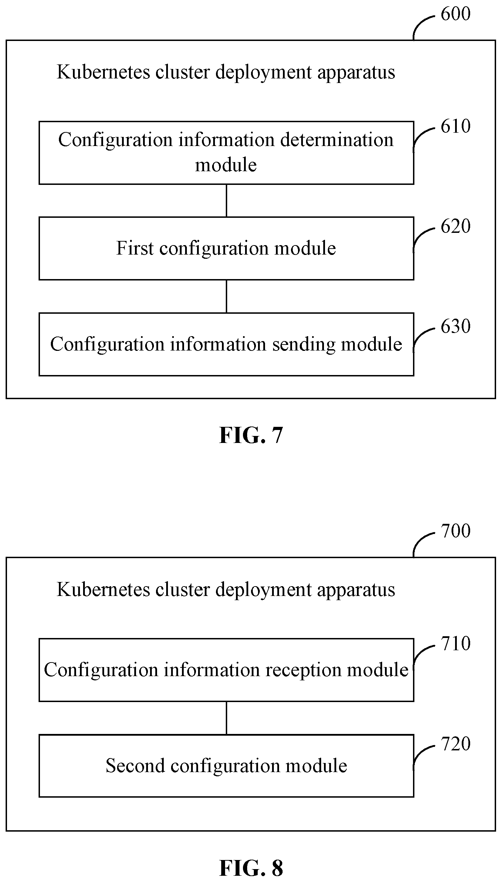

In an example, FIG. 7 is a diagram illustrating the structure of a cluster deployment apparatus according to an embodiment of the present disclosure. The embodiment of the present disclosure is applicable to the case of deploying a cluster according to a Client/Server (CS) architecture. The apparatus is implemented by software and/or hardware and is specifically configured in an electronic device in which a cluster client program of a master node is installed. The electronic device may be a terminal device or a server device, and the embodiment of the present disclosure does not limit the type of the electronic device.

The cluster deployment apparatus 600 shown in FIG. 7 includes a configuration information determination module 610, a first configuration module 620 and a configuration information sending module 630.

The configuration information determination module 610 is configured to determine master node configuration information of a cluster master node and slave node configuration information of a cluster slave node.

The first configuration module 620 is configured to perform independent configuration on a local host according to the master node configuration information.

The configuration information sending module 630 is configured to send the slave node configuration information to each cluster slave node to enable the each cluster slave node to perform independent configuration on the local host according to the slave node configuration information.

According to the embodiment of the present disclosure, the master node configuration information of the cluster master node and the cluster slave node configuration information are determined through a cluster client program of the cluster master node, thus the independent configuration is performed on the local host according to the determined master node configuration information, and the slave node configuration information is sent to each cluster slave node to enable the cluster client program of the each cluster slave node to perform the independent configuration on the local host according to the received slave node configuration information. In this way, the problem is solved that the cluster deployed by the related cluster deployment method has relatively low applicability and extensibility, the deployment efficiency and the fault tolerance of the cluster can be improved, and the applicability and the extensibility of the deployed cluster can be improved.

Optionally, the cluster includes a Kubernetes cluster, the cluster master node includes a Kubernetes cluster master, and the cluster slave node includes a Kubernetes cluster slave node.

Optionally, the configuration information determination module 610 is specifically configured to: acquire current node configuration information; and in a case where it is determined that a node role of the current node configuration information is a Kubernetes cluster master node role, determine the current node configuration information as the master node configuration information, where the master node configuration information includes node configuration information and Kubernetes cluster custom configuration information.

Optionally, the configuration information determination module 610 is specifically configured to: acquire node identification information and preset slave node configuration information of each Kubernetes cluster slave node; and generate the slave node configuration information according to the node identification information and the preset slave node configuration information of the each Kubernetes cluster slave node.

Optionally, the first configuration module 620 is specifically configured to: perform Kubernetes cluster initialization configuration on the local host; and install a Kubernetes cluster association component on the local host, where the Kubernetes cluster association component includes a Kubernetes cluster core component, a Kubernetes cluster basic functional component and a Kubernetes cluster additional functional component.

Optionally, the apparatus further includes a configuration environment check module, a cluster test application creation module and a cluster basic function test module. The configuration environment check module is configured to perform a Kubernetes cluster configuration check and a Kubernetes cluster environment check on the local host. The cluster test application creation module is configured to create a Kubernetes cluster test application. The cluster basic function test module is configured to detect a Kubernetes cluster basic function according to the Kubernetes cluster test application.

Optionally, the configuration information sending module 630 is specifically configured to: send the slave node configuration information to a configuration information message queue, where each Kubernetes cluster slave node is used for acquiring target slave node configuration information from the configuration information message queue according to node identification information of the local host, so as to perform the independent configuration on the local host according to the target slave node configuration information.

The preceding cluster deployment apparatus may execute the cluster deployment method executed by the cluster client program of the cluster master node provided by any embodiment of the present disclosure, and has functional modules and beneficial effects corresponding to the executed method. For technical details not described in detail in the embodiment, reference may be made to the cluster deployment method executed by the cluster client program of the cluster master node provided by any embodiment of the present disclosure.

In an example, FIG. 8 is a diagram illustrating the structure of a cluster deployment apparatus according to an embodiment of the present disclosure. The embodiment of the present disclosure is applicable to the case of deploying a cluster according to a CS architecture. The apparatus is implemented by software and/or hardware and is specifically configured in an electronic device in which a cluster client program of a slave node is installed. The electronic device may be a terminal device or a server device, and the embodiment of the present disclosure does not limit the type of the electronic device.

The cluster deployment apparatus 700 shown in FIG. 8 includes a configuration information reception module 710 and a second configuration module 720.

The configuration information reception module 710 is configured to receive slave node configuration information from a cluster master node.

The second configuration module 720 is configured to perform independent configuration on a local host according to the slave node configuration information.

In the embodiment of the present disclosure, a cluster client program of a cluster slave node receives the cluster slave node configuration information from a cluster client program of the master node, so as to perform the independent configuration on the local host according to the received slave node configuration information. In this way, the problem can be solved that the cluster deployed by the related cluster deployment method has relatively low applicability and extensibility, the deployment efficiency and the fault tolerance of the cluster can be improved, and the applicability and the extensibility of the deployed cluster can be improved.

Optionally, the cluster includes a Kubernetes cluster, the cluster master node includes a Kubernetes cluster master, and the cluster slave node includes a Kubernetes cluster slave node.

Optionally, the configuration information reception module 710 is specifically configured to: acquire node identification information of the local host; and acquire target slave node configuration information from a configuration information message queue according to the node identification information of the local host, where the configuration information message queue is used for receiving slave node configuration information from the Kubernetes cluster master node.

Optionally, the node type of the local host is a service discovery ETCD node. The second configuration module 720 is specifically configured to: perform Kubernetes cluster initialization configuration on the local host; install an ETCD service on the local host according to the slave node configuration information; and check a health state of the ETCD service.

Optionally, the node type of the local host is a worker node. The second configuration module 720 is specifically configured to: perform Kubernetes cluster initialization configuration on the local host; and execute a node installation flow on the local host according to the slave node configuration information.

Optionally, the apparatus further includes: an environment check module configured to perform a Kubernetes cluster environment check on the local host.

The preceding cluster deployment apparatus may execute the cluster deployment method executed by the cluster client program of the cluster slave node provided by any embodiment of the present disclosure, and has functional modules and beneficial effects corresponding to the executed method. For technical details not described in detail in the embodiment, reference may be made to the cluster deployment method executed by the cluster client program of the cluster slave node provided by any embodiment of the present disclosure.

In an example, the present disclosure further provides an electronic device, a readable storage medium and a computer program product.

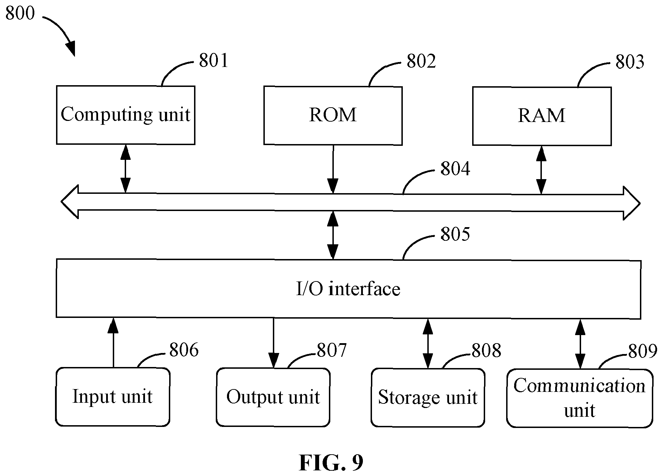

FIG. 9 is a block diagram of an exemplary electronic device 800 that may be configured to implement the embodiments of the present disclosure. Electronic devices are intended to represent various forms of digital computers, for example, a laptop computer, a desktop computer, a worktable, a personal digital assistant, a server, a blade server, a mainframe computer or another applicable computer. Electronic devices may further represent various forms of mobile apparatuses, for example, personal digital assistants, cellphones, smartphones, wearable devices, and other similar computing apparatuses. Herein the shown components, the connections and relationships between these components, and the functions of these components are illustrative only and are not intended to limit the implementation of the present disclosure as described and/or claimed herein.

As shown in FIG. 9, the device 800 includes a computing unit 801. The computing unit 801 may perform various types of appropriate operations and processing based on a computer program stored in a read-only memory (ROM) 802 or a computer program loaded from a storage unit 808 to a random-access memory (RAM) 803. Various programs and data required for operations of the device 800 may also be stored in the RAM 803. The computing unit 801, the ROM 802 and the RAM 803 are connected to each other through a bus 804. An input/output (I/O) interface 805 is also connected to the bus 804.

Multiple components in the device 800 are connected to the I/O interface 805. The components include an input unit 806 such as a keyboard and a mouse, an output unit 807 such as various types of displays and speakers, the storage unit 808 such as a magnetic disk and an optical disc, and a communication unit 809 such as a network card, a modem and a wireless communication transceiver. The communication unit 809 allows the device 800 to exchange information/data with other devices over a computer network such as the Internet and/or various telecommunications networks.

The computing unit 801 may be various general-purpose and/or special-purpose processing components having processing and computing capabilities. Examples of the computing unit 801 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller and microcontroller. The computing unit 801 performs various methods and processing described above, such as the cluster deployment method. For example, in some embodiments, the cluster deployment method may be implemented as a computer software program tangibly contained in a machine-readable medium such as the storage unit 808. In some embodiments, part or all of computer programs may be loaded and/or installed on the device 800 via the ROM 802 and/or the communication unit 809. When the computer program is loaded to the RAM 803 and executed by the computing unit 801, one or more steps of the preceding cluster deployment method may be executed. Alternatively, in other embodiments, the computing unit 801 may be configured, in any other suitable manner (for example, by means of firmware), to execute the cluster deployment method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for the implementation of the method of the present disclosure may be written in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical memory device, a magnetic memory device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS). The server may also be a server of a distributed system, or a server combined with a blockchain.

According to the embodiments of the present disclosure, master node configuration information of a cluster master node and cluster slave node configuration information are determined through a cluster client program of the cluster master node, thus independent configuration is performed on a local host according to the determined master node configuration information, and the slave node configuration information is sent to each cluster slave node to enable a cluster client program of the each cluster slave node to perform independent configuration on the local host according to the received slave node configuration information. In this way, the problem can be solved that the cluster deployed by the related cluster deployment method has relatively low applicability and extensibility, the deployment efficiency and the fault tolerance of the cluster can be improved, and the applicability and the extensibility of the deployed cluster can be improved.

It is to be understood that various forms of the preceding flows may be used with steps reordered, added, or removed. For example, the steps described in the present disclosure may be executed in parallel, in sequence or in a different order as long as the desired result of the technical solutions disclosed in the present disclosure is achieved. The execution sequence of these steps is not limited herein.

The scope of the present disclosure is not limited to the preceding embodiments. It is to be understood by those skilled in the art that various modifications, combinations, subcombinations, and substitutions may be made according to design requirements and other factors. Any modification, equivalent substitution, improvement and the like made within the spirit and principle of the present disclosure falls within the scope of the present disclosure.

## Claims

1. A method of deploying a cluster, applied to a cluster client program of a cluster master node, comprising:
determining (S10) master node configuration information of the cluster master node and slave node configuration information of each of a plurality of cluster slave nodes;
performing (S120, S250) independent configuration on the cluster master node according to the master node configuration information; and
sending (S130) a respective slave node configuration information to each cluster slave node, so that each cluster slave node performs independent configuration on the each cluster slave node according to the respective slave node configuration information.

2. The method according to claim 1, wherein the cluster comprises a Kubernetes cluster, the cluster master node comprises a Kubernetes cluster master node, and the plurality of cluster slave nodes comprise a plurality of Kubernetes cluster slave nodes.

3. The method according to claim 2, wherein determining (S110) master node configuration information of the Kubernetes cluster master node comprises:
acquiring (S210) current node configuration information; and
in response to determining that a node with the current node configuration information is the Kubernetes cluster master node, determining (S220) the current node configuration information as the master node configuration information, wherein
the master node configuration information comprises node configuration information and Kubernetes cluster custom configuration information.

4. The method according to claim 2, wherein determining (S110) slave node configuration information of each Kubernetes cluster slave node comprises:
acquiring (S230) node identification information and preset slave node configuration information of each Kubernetes cluster slave node; and
generating (S240) the slave node configuration information of each Kubernetes cluster slave node according to the node identification information and the preset slave node configuration information of the each Kubernetes cluster slave node.

5. The method according to claim 2, wherein performing the independent configuration on the cluster master node according to the master node configuration information comprises:
performing Kubernetes cluster initialization configuration on the Kubernetes cluster master node; and
installing a Kubernetes cluster association component on the Kubernetes cluster master node, wherein
the Kubernetes cluster association component comprises a Kubernetes cluster core component, a Kubernetes cluster basic functional component and a Kubernetes cluster additional functional component.

6. The method according to claim 2, further comprising:
performing a Kubernetes cluster configuration check and a Kubernetes cluster environment check on the Kubernetes cluster master node;
creating a Kubernetes cluster test application; and
detecting a Kubernetes cluster basic function according to the Kubernetes cluster test application.

7. The method according to claim 2, wherein sending the respective slave node configuration information to each Kubernetes cluster slave node, so that each Kubernetes cluster slave node performs the independent configuration on the each cluster slave node according to the respective slave node configuration information comprises:
separately sending (S260) slave node configuration information of each Kubernetes cluster slave node to a configuration information message queue, wherein
each Kubernetes cluster slave node is used for acquiring target slave node configuration information from the configuration information message queue according to node identification information of the each Kubernetes cluster slave node and performing the independent configuration on the each Kubernetes cluster slave node according to the target slave node configuration information.

8. A method of deploying a cluster, applied to a cluster client program of a cluster slave node, comprising:
receiving (S310) slave node configuration information from a cluster master node; and
performing (S320) independent configuration on the cluster slave node according to the slave node configuration information.

9. The method according to claim 8, wherein the cluster comprises a Kubernetes cluster, the cluster master node comprises a Kubernetes cluster master node, and the cluster slave node comprises a Kubernetes cluster slave node.

10. The method according to claim 9, wherein receiving slave node configuration information from the Kubernetes cluster master node comprises:
acquiring (S410) node identification information of the Kubernetes cluster slave node; and
acquiring (S420) target slave node configuration information from a configuration information message queue according to the node identification information of the Kubernetes cluster slave node, wherein
the configuration information message queue is used for receiving the slave node configuration information from the Kubernetes cluster master node.

11. The method according to claim 9, wherein
a node type of the Kubernetes cluster slave node is a service discovery ETCD node; and
performing (S440) the independent configuration on the Kubernetes cluster slave node according to the slave node configuration information comprises:
performing (S441) Kubernetes cluster initialization configuration on the Kubernetes cluster slave node;
installing (S442) an ETCD service on the Kubernetes cluster slave node according to the slave node configuration information; and
checking (S443) a health state of the ETCD service.

12. The method according to claim 9, wherein
a node type of the Kubernetes cluster slave node is a worker node; and
performing (S440) the independent configuration on the Kubernetes cluster slave node according to the slave node configuration information comprises:
performing (S444) Kubernetes cluster initialization configuration on the Kubernetes cluster slave node; and
executing (S445) a worker node installation flow on the Kubernetes cluster slave node according to the slave node configuration information.

13. The method according to any one of claims 9 to 12, further comprising:
performing (S430) a Kubernetes cluster environment check on the Kubernetes cluster slave node.

14. An apparatus of deploying a cluster (600), configured on a cluster client program of a cluster master node, comprising:
a configuration information determination module (610) configured to determine master node configuration information of the cluster master node and slave node configuration information of each of a plurality of cluster slave nodes;
a first configuration module (620) configured to perform independent configuration on the cluster master node according to the master node configuration information; and
a configuration information sending module (630) configured to send a respective slave node configuration information to each cluster slave node, so that each cluster slave node performs independent configuration on the each cluster slave node according to the respective slave node configuration information.

15. An apparatus of deploying a cluster (700), configured on a cluster client program of a cluster slave node, comprising:
a configuration information reception module (710) configured to receive slave node configuration information from a cluster master node; and
a second configuration module (720) configured to perform independent configuration on the cluster slave node according to the slave node configuration information.

16. An electronic device (800), comprising:
at least one processor; and
a memory communicatively connected to the at least one processor;
wherein the memory stores instructions executable by the at least one processor to cause the at least one processor to execute the apparatus of deploying the cluster according to claim 14 or 15.

17. Anon-transitory computer-readable storage medium storing computer instructions for causing a computer to execute the apparatus of deploying the cluster according to claim 14 or 15.

18. A computer program product, comprising a computer program which, when executed by a processor, implements the apparatus of deploying the cluster according to claim 14 or 15.
